# EUROPEAN PATENT SPECIFICATION

(11) **EP 0 491 060 B1**
(45) Date of publication and mention of the grant of the patent: **07.12.1994**
(21) Application number: 90124346.9
(22) Date of filing: 15.12.1990
(51) Int. Cl.: F16D 31/04

(54) **Hydraulic clutch**
Hydraulische Kupplung
Accouplement hydraulique

(43) Date of publication of application: 24.06.1992
(73) Proprietor: Kuo, Jian-Fu, Taipei (TW)
(72) Inventor: Kuo, Jian-Fu, Taipei (TW)
(74) Representative: Rottmann, Maximilian R.

(56) References cited:
- GB-A- 2 143 601
- US-A- 2 282 395
- US-A- 3 051 283

## Description

### BACKGROUND OF THE INVENTION

The present invention relates to a clutch, and more particularly to an improved hydraulic clutch.

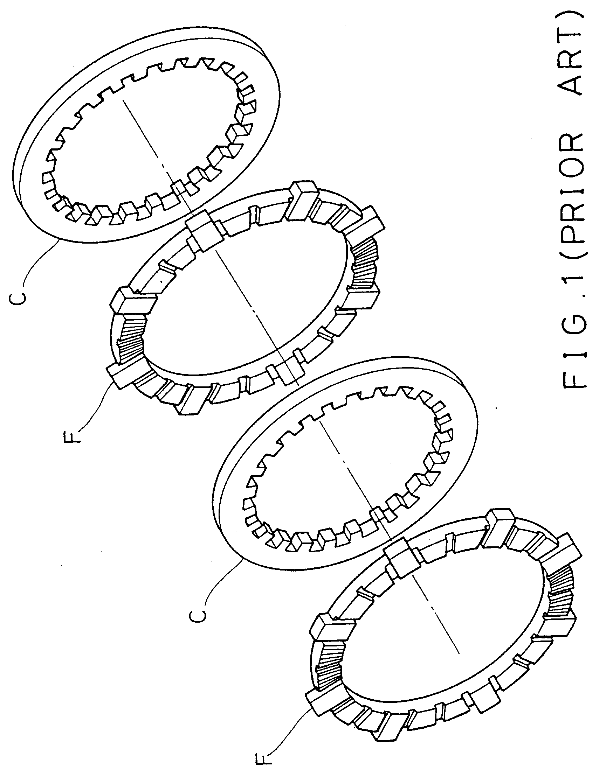

In a most common conventional clutch, which is usually referred to as a friction clutch, the power connection or disconnection between a power source and an output shaft is achieved by optionally engaging or disengaging a series of friction disks F and clutch plates C alternately arranged (see Fig. 1) between the power source and the output shaft. Such a friction clutch is disadvantageous in that the friction disks F usually wear out rather soon.

The U.S.Pat.No.2,282,395 discloses a hydraulic transmission, in particular, a variable speed hydraulic transmission adaptable for variable speed connection between a driving member and a driven member, for example, such as for use in a motor vehicle, in which a plurality of power an speed transmission ratios are employed between the engine an the propeller shaft for propulsion of the vehicle.

The U.S.Pat.No.3,051,283 discloses an automatic hydraulic transmission between a power input shaft and a power output shaft. This transmission is in particular for use in automotive vehicles and in machine tool drive mechanisms.

### SUMMARY OF THE INVENTION

It is therefore an object of the present invention to provide a durable hydraulic clutch for power transmission between a power source and an output shaft which can be applied to a wide range.

According to the present invention, a hydraulic clutch comprises a pump mechanism including a hollow housing assembly coupled to the power source and rotatably mounted on the output shaft and having hydraulic passages provided therein, a passive gear fixed to the output shaft, and at least one driving gear rotatably supported within the housing assembly and engaging for driving the passive gear; a valve member sleeved on the output shaft; a passage system provided among the output shaft, the pump mechanism and the valve member, and adapted to be flooded with a liquid coming from a liquid source; and a control mechanism adapted to optionally control the hydraulic clutch either to become a dynamically connected state wherein the output shaft is dynamically connected to the power source by interrupting the passage system to establish a sufficiently high hydraulic pressure within the housing assembly and around the driving and passive gears, or to become a dynamically disconnected state wherein the output shaft is disconnected from the power source by opening the passage system to release the established hydraulic pressure within the housing assembly.

### BRIEF DESCRIPTION OF THE DRAWING

The present invention may be better understood through the following description with reference to the accompanying drawings, in which:
Fig. 1 is a schematically perspective view showing how a conventional friction clutch works;
Fig. 2 is a sectional view showing a preferred embodiment of a hydraulic clutch according to the present invention;
Fig. 2A is a sectional view taken along line 2A-2A in Fig.2;
Fig. 2B is a perspective view showing a centrifugal weight of a hydraulic clutch in Fig.2A; and
Fig. 3 is fragmentarily exploded perspective view showing part of a valve member included in the hydraulic clutch illustrated in Fig.2.

### DETAILED DESCRIPTION OF THE PREFERRED EMBODIMENT

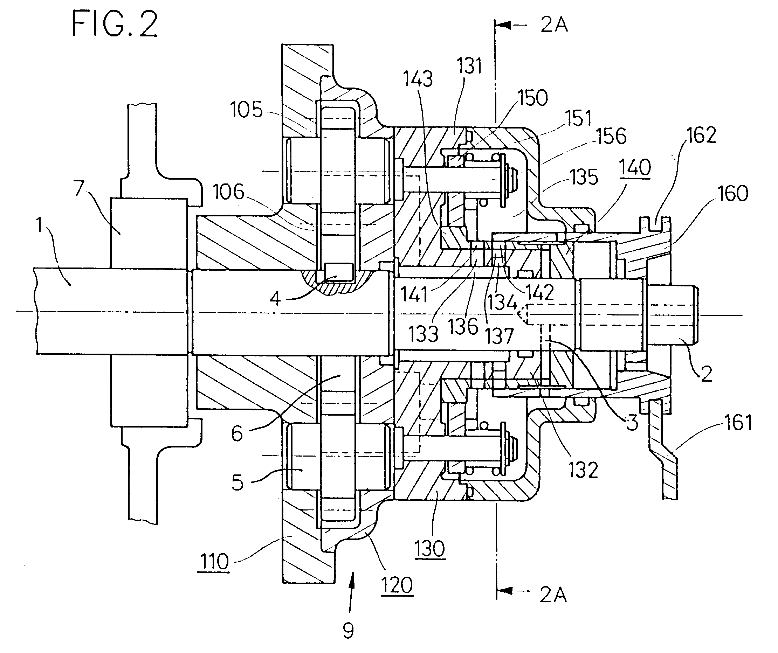

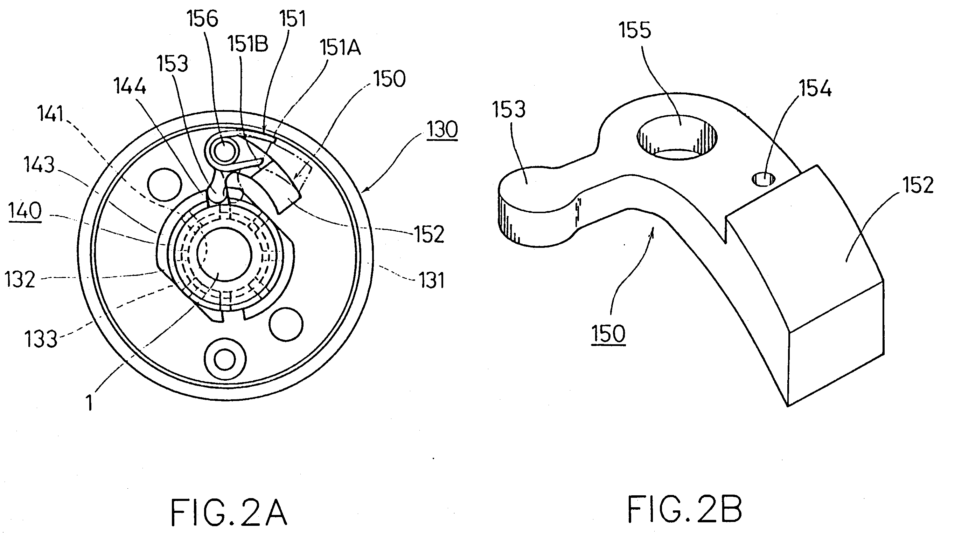

Referring now to Figs. 2-3, a preferred embodiment of a hydraulic clutch according to the present invention is mounted between a power source (not shown) and an output shaft 1 having an axial oil passage 2 and a radial oil passage 3 communicating with passage 2 and includes a pump mechanism, a valve member 140, a passage means provided among the output shaft 1, the pump mechanism and the valve member 140 to be flooded with hydraulic oil, and a control mechanism capable of interrupting the passage means.

The pump mechanism includes a passive pumping gear 6 coaxially keyed to shaft 1 by a key 4, a pair of driving gears 5 driven by and diametrically oppositely positioned with respect to the passive pumping gear 6, and a housing assembly 9 for receiving gears 5 and 6. The housing assembly 9 includes a hub 110 dynamically coupled to the power source and rotatably mounted on shaft 1, a pump body 120 coaxially fixed to and cooperates with hub 110 to receive therebetween gears 5 and 6, and a pump casing 130 coaxially fixed to pump body 120 and having and outer annulus 131 and a hollow central portion 132 rotatably sleeving thereon valve member 140, and an annular space 135 formed between annulus 131 and central portion 132. Valve member 140 has an end flange 143 provided with two diametrically oppositely disposed indentations 144. A sleeve 160 is slidably sleeved on valve member 140.

The passage means of the embodiment includes a first through hole 141 and a second through hole 142 both axially spacedly provided on valve member 140, a third through hole 133 and a fourth through hole 134 both axially spacedly provided on central portion 132 and respectively corresponding to first through hole 141 and second through hole 142, a cylindrical oil passage 136 formed between central portion 132 and shaft 1, and an annular groove 137 provided around the periphery of central portion 132 for always communicating fourth through hole 134 with second through hole 142 no matter how valve member 140 is rotated with respect to central portion 132. The second through hole 142 can be closed by sleeve 160 in a manner to be described latter.

The control mechanism of the embodiment comprises an automatic control device including a pair of weights 150 and a pair of torsional springs 151, and a manual control device including a control rod 161 having an end engaged in an annular groove 162 of sleeve 160 so that an operator can operate control rod 161 to axially slide sleeve 160 on valve member 140 for opening or closing second through hole 142. Each weight 150 includes a centrifugally moving portion 152, an engaging pawl 153 engaged in one of the two indentations 144, a retaining hole 154, and a pivoting hole 155 through which a pin 156, secured at one end to casing 130, passes for pivotally mounting weight 150 thereon. Spring 151 is pivotally mounted around pin 156, and has one end retained in hole 154 and the other end urged against outer annulus 131 so that when portion 152 is centrifugally moved outward to the position shown by dotted line in Fig. 2A against the biasing effect of torsional spring 151, engaging pawl 153 will rotate valve member 140 with respect to casing 130 as will be described in further detail hereinafter.

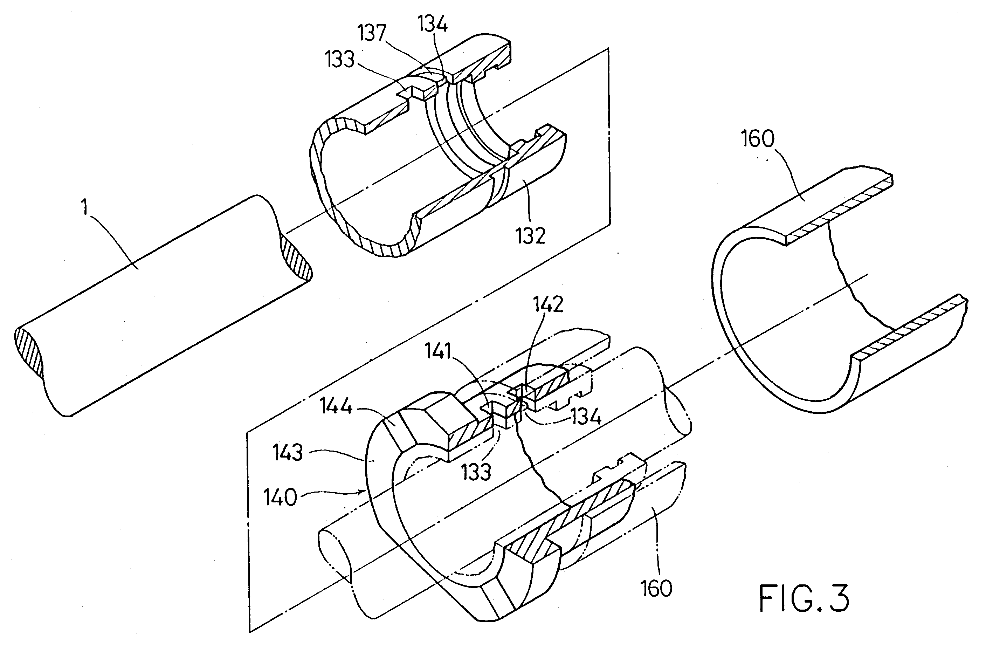

When hub 110 or pump casing 130 rotates at relatively low speed so that portion 152 only suffers a relatively small centrifugal force incapable of counteracting the biasing force provided by spring 151, weight 150 remains at a position shown by solid line in Fig. 2A, and first through hole 141 is kept aligned with third hole 133 (see Figs. 2 and 3) so that the oil passage is not interrupted and thus an increasing hydraulic pressure cannot be established in the pump mechanism of the present hydraulic clutch so that output shaft 1 and hub 110, which is connected to the power source, are in a dynamically disconnected state.

When hub 110 or pump casing 130 rotates at a sufficiently high speed so that portion 152 of weight 150 carried thereby is subject to a centrifugal force large enough for overcoming the biasing force acting on weight 150 by spring 151, and weight 150 is forced to move to the dotted-line position (see also Fig. 2A) so as to drive valve member 140 to rotate relative to central portion 132 by means of ite pawl 153, thus moving valve member 140 into a position in which first through hole 141 is no more in alignment with third through hole 133. Under such situation, since second through hole 142 is closed by sleeve 160 also, oil passage 136 cannot communicate with annular space 135 so that an increasing hydraulic oil prissure can be established gradually in the pump mechanism, thus dynamically connecting output shaft 1 and hub 110 which is coupled to the power source. If the operator now operates control rod 161 to axially slide sleeve 160 on valve member 140 to release second through hole 142 from being closed by sleeve 160, the interrupted hydraulic oil line will thus be re-opened so that hub 10 and shaft 1 can enter a dynamically disconnected state, thus permitting the operator to shift gears.

The above described embodiments are illustrative but not limitative and can easily be modified by those skilled in the art, e.g. incorporating an electromagnetic control into the control mechanism, without departing from the scope of the present invention which is defined in the appended claims.

## Claims

1. A hydraulic clutch, comprising:
a pump mechanism including a hollow housing assembly coupled to a power source and rotatably mounted on an output shaft (1) and having hydraulic passages provided therein, a passive gear (6) fixed to the output shaft (1), and at least one driving gear (5) rotatably supported within said housing assembly and engaging for driving said passive gear (6);
a valve member (140) sleeved on the output shaft (1) for movement relative to said output shaft (1);
a passage means provided by said output shaft (1), said pump mechanism and said valve member (140), and adapted to be flooded with a liquid coming from a liquid source; and
a control mechanism adapted to optionally control the hydraulic clutch either to become a dynamically connected state wherein the output shaft (1) is dynamically connected to the power source by shifting the position of the valve member (140) on said output shaft (1), interrupting said passage means to establish a sufficiently high hydraulic pressure within said housing assembly and around said driving and passive gears (5, 6), or to become a dynamically disconnected state wherein the output shaft (1) is disconnected from the power source by opening said passage means to release the established hydraulic pressure within said housing assembly,
said housing assembly includes:
a hub (110) rotatably mounted on the output shaft (1) and coupled to the power source;
a pump body (120) coaxially fixed to said hub (110), said pump body (120) rotatably mounting said driving gear (5);
a pump case (130) coaxially fixed to said pump body (120) for receiving therein said valve member (140),
said control mechanism including an automatic control device and a manual control device,
said automatic control device including a centrifugal member held between said pump mechanism and said valve member (140) and adapted to move said valve member (140) when sufficient centrifugal force is exerted on said valve member (140), and a biasing member for urging one of said centrifugal member and said valve member (140) against the other one of said centrifugal member and said valve member (140),
characterized in that
said centrifugal member includes at least one weight (150) pivotally supported by said housing assembly and having a centrifugally moving portion (152) and an engaging pawl (153);
said biasing member is a torsional spring (151) mounted between said weight (150) and said housing assembly;
said engaging pawl (153) engaging said valve member (140) for rotating said valve member (140) to interrupt said passage means when said housing assembly rotates at a sufficiently high speed capable of overcoming the biasing force exerted on the weight (150) by said biasing means;
said passage means includes at least a first through hole (141) and at least a second through hole (142) spacedly provided said valve member (140), at least a third through hole (133) and at least a fourth through hole (134) spacedly provided on said central portion (132) and respectively capable of being aligned with said first and second through holes (141, 142), and an annular groove (137) peripherally provided on said central portion (132) for always communicating said second through hole (142) with said fourth through hole (134);
and said hydraulic clutch further includes a sleeve (160) axially slidable sleeved on said valve member (140) and capable of closing said second through hole (142) so that when said second hole (142) is closed by said sleeve (160) and said housing assembly rotates at a sufficiently high speed for enabling said weight (150) to actuate said valve member (140) so as to rotate the valve member (140) and thus interrupt the alignment between the first through hole (141) and the third through hole (133), a hydraulic pressure can be established in said housing assembly, for dynamically connecting said housing assembly and said output shaft(1).

2. A hydraulic clutch according to Claim 1, wherein said manual control device includes a control rod (161) which can be operated directly by the operator to move said sleeve (160) to a first position closing said second through hole (142) or a second position disclosing said second through hole (142).

## Patentansprüche

1. Hydraulische Kupplung, enthaltend:
eine Pumpenvorrichtung mit einer hohlen Gehäuseanordnung, welche mit einer Kraftquelle gekuppelt und auf einer Ausgangswelle (1) drehbar montiert ist und hydraulische Durchgänge darin aufweist, ein auf der Ausgangswelle fest montiertes passives Zahnrad (6) und wenigstens ein Antriebszahnrad (5), welches innerhalb der genannten Gehäuseanordnung drehbar gelagert ist und mit dem genannten passiven Zahnrad (6) zu dessen Antrieb im Eingriff steht;
eine Ventilvorrichtung (140), die auf der Ausgangswelle (1) relativ zu dieser bewegbar gelagert ist;
ein Durchgangssystem, das der genannten Ausgangswelle (1), der genannten Pumpenvorrichtung und der genannten Ventilvorrichtung (140) zugeordnet und zum Auffüllen mit einer von einer Flüssigkeitsquelle stammenden Flüssigkeit eingerichtet ist; und
eine Steuervorrichtung zum wahlweise Steuern der hydraulischen Kupplung entweder in einen dynamischen Verbindungszustand oder in einen dynamischen Trennungszustand, wobei durch Verschieben der Lage der Ventilvorrichtung (140) auf der genannten Ausgangswelle (1) das Durchgangssystem unterbrochen und dadurch ein genügend hoher hydraulischer Druck innerhalb der Gehäuseanordnung und rund um die passiven und antreibenden Zahnräder aufgebaut wird, um die Ausgangswelle mit der Kraftquelle dynamisch zu verbinden, bzw. durch Öffnen des Durchgangssystems den in der Gehäuseanordnung herrschenden hydraulischen Druck abzubauen, um die Ausgangswelle von der Kraftquelle zu trennen; wobei die genannte Gehäuseanordnung umfasst:
eine Radnabe (110), welche auf der Ausgangswelle (1) drehbar montiert und mit der Kraftquelle gekuppelt ist;
einen Pumpenkörper (120), der an der genannten Radnabe (110) koachsial befestigt ist und an dem das genannte Antriebszahnrad (5) drehbar gelagert ist;
ein Pumpengehäuse (130), das an dem genannten Pumpenkörper (120) koachsial befestigt ist, um darin die genannte Ventilvorrichtung (140) aufzunehmen; wobei
die genannte Steuereinrichtung eine automatische Steuervorrichtung und eine handbetätigte Steuervorrichtung aufweist und
die genannte automatische Steuervorrichtung ein Zentrifugalglied aufweist, das zwischen der genannten Pumpenvorrichtung und der genannten Ventilvorrichtung (14) gehalten und dazu eingerichtet ist, die genannte Ventilvorrichtung (140) zu bewegen, wenn eine genügend hohe Zentrifugalkraft auf das genannte Zentrifugalglied ausgeübt wird, sowie ein Vorspannorgan, das entgegen der Zentrifugalkraft auf das genannte Zentrifugalglied und die genannte Ventilvorrichtung (140) einwirkt,
**dadurch gekennzeichnet,**
dass das genannte Zentrifugalglied wenigstens ein Gewicht (150) enthält, das an der genannten Gehäuseanordnung drehbar gelagert ist und einen unter der Wirkung der Zentrifugalkraft bewegbaren Teil (152) und einen Schalthebel (153) aufweist;
dass das genannte Vorspannorgan eine Torsionsfeder (151) ist, die zwischen dem genannten Gewicht (150) und der genannten Gehäuseanordnung montiert ist;
dass der genannte Schalthebel (153) mit der genannten Ventilvorrichtung (140) im Eingriff steht, um diese zu drehen und das genannte Durchgangssystem zu unterbrechen, wenn die genannte Gehäuseanordnung mit einer genügend hohen Geschwindigkeit rotiert, die ausreicht, um die durch das genannte Vorspannorgan auf das Gewicht (150) ausgeübte Vorspannkraft zu überwinden;
dass das genannte Durchgangssystem wenistens eine erste Durchgangsöffnung (141) und wenigstens eine zweite Durchgangsöffnung (142) enthält, welche in achsialem gegenseitigen Abstand in der Ventilvorrichtung (140) angeordnet sind, und wenigstens eine dritte Durchgangsöffnung ((133) und wenigstens eine vierte Durchgangsöffnung (134) enthält, welche in achsialem gegenseitigen Abstand in dem genannten Zentralteil (132) angeordnet und auf die erste und zweite Durchgangsöffnungen (141, 142) ausrichtbar sind, sowie eine Ringnut (137) aufweist, welche sich am Umfang des genannten Zentralteils (132) befindet und mit der genannten zweiten Durchgangsöffnung (142) und der genannten vierten Durchgangsöffnung (134) stets in Verbindung steht;
und dass die genannte hydraulische Kupplung ferner eine Hülse (160) enthält, welche auf der genannten Ventilvorrichtung (140) achsial verschiebbar gelagert ist und die zweite Durchgangsöffnung (142) verschliessen kann, so dass, wenn die genannte zweite Durchgangsöffnung (142) durch die genannte Hülse (160) verschlossen ist und die genannte Gehäuseanordnung mit einer Geschwindigkeit rotiert, die genügend hoch ist, um es dem genannten Gewicht (150) zu ermöglichen, die genannte Ventilvorrichtung (140) zu betätigen, um die Ventilvorrichtung (140) zu drehen und auf diese Weise die Ausrichtung zwischen der ersten Durchgangsöffnung (141) und der dritten Durchgangsöffnung (133) aufzuheben, in der genannten Gehäuseanordnung ein hydraulischer Druck aufgebaut werden kann, um die genannte Gehäuseanordnung mit der genannten Ausgangswelle (1) dynamisch zu, verbinden.

2. Hydraulische Kupplung nach Anspruch 1, dadurch gekennzeichnet, dass die genannte Handsteuervorrichtung einen Steuerhebel (161) enthält, welcher von der Bedienungsperson direkt betätigbar ist, um die genannte Hülse (160) in eine erste Lage zum Schliessen der genannten zweiten Durchgangsöffnung (142) oder in eine zweite Lage zum Öffnen der genannten zweiten Durchgangsöffnung (142) zu bewegen.

## Revendications

1. Embrayage hydraulique, comprenant :
un mécanisme de pompe comportant un ensemble de carter creux couplé à une source de puissance et monté de façon rotative sur un arbre de sortie (1) et pourvu de passages hydrauliques à l'intérieur, un engrenage passif (6) fixé à l'arbre de sortie (1), et au moins un engrenage d'entraînement (5) supporté en rotation à l'intérieur dudit ensemble de carter et engrenant avec ledit engrenage passif (6) pour l'entraîner;
un élément de vanne (140) entourant l'arbre de sortie (1) pour se déplacer par rapport audit arbre de sortie (1) ;
un moyen de passage fourni par ledit arbre de sortie (1), ledit mécanisme de pompe et ledit élément de vanne (140), et conçu pour être alimenté avec un liquide provenant d'une source de liquide ; et
un mécanisme de commande prévu pour commander de façon optionnelle l'embrayage hydraulique, soit pour établir un état de connexion dynamique dans lequel l'arbre de sortie (1) est connecté dynamiquement à la source de puissance en décalant la position de l'élément de vanne (140) sur ledit arbre de sortie (1), bloquant ledit moyen de passage pour établir une pression hydraulique suffisamment élevée à l'intérieur dudit ensemble de carter et autour desdits engrenages passif et d'entraînement (5, 6), soit pour établir un état de déconnexion dynamique dans lequel l'arbre de sortie (1) est déconnecté de la source de puissance par ouverture dudit moyen de passage afin de libérer la pression hydraulique établie à l'intérieur dudit ensemble de carter,
ledit ensemble de carter comprenant :
un moyeu (110) monté de façon rotative sur l'arbre de sortie (1) et couplé à la source de puissance ;
un corps de pompe (120) fixé coaxialement audit moyeu (110), ledit engrenage d'entraînement (5) étant monté de façon rotative dans ledit coprs de pompe (120) ;
un boîtier de pompe (130) fixé coaxialement audit corps de pompe (120) pour y recevoir ledit élément de vanne (140),
ledit mécanisme de commande comprenant un dispositif de commande automatique et un dispositif de commande manuel,
ledit dispositif de commande automatique comprenant un élément centrifuge maintenu entre ledit mécanisme de pompe et ledit élément de vanne (140) et prévu pour déplacer ledit élément de vanne (140) quand une force centrifuge suffisante est exercée sur ledit élément de vanne (140), et un élément de poussée pour pousser l'un dudit élément centrifuge et dudit élément de vanne (140) contre l'autre,
caractérisé en ce que
ledit élément centrifuge comprend au moins une masselotte (150) supportée de façon pivotante par ledit ensemble de carter et présentant une partie (152) mobile de façon centrifuge et un cliquet d'engagement (153) ;
ledit élément de poussée est un ressort de torsion (151) monté entre ladite masselotte (150) et ledit ensemble de carter ;
ledit cliquet d'engagement (153) s'engageant dans ledit élément de vanne (140) pour faire tourner ledit élément de vanne (140) afin de bloquer ledit moyen de passage quand ledit ensemble de carter tourne à une vitesse suffisamment élevée capable de dépasser la force de poussée exercée sur la masselotte (150) par ledit moyen de poussée ;
ledit moyen de passage comprend au moins un premier trou traversant (151) et au moins un deuxième trou traversant (152) prévus de façon espacée sur ledit élément de vanne (140), au moins un troisième trou traversant et au moins un quatrième trou traversant prévus de façon espacée sur ladite partie centrale (132) et respectivement capables de s'aligner avec lesdits premier et deuxième trous traversants (141, 142), et une gorge annulaire (137) prévue de façon périphérique sur ladite partie centrale (132) pour faire communiquer en permanence ledit deuxième trou traversant (142) avec ledit quatrième trou traversant (134) ;
et ledit embrayage hydraulique comprend un manchon (160) entourant axialement de façon coulissante ledit élément de vanne (140) et capable de fermer ledit deuxième trou traversant (142) de sorte que quand ledit deuxième trou (142) est fermé par ledit manchon (160) et ledit ensemble de carter tourne à une vitesse suffisamment élevée pour permettre à ladite masselotte (150) d'actionner ledit élément de vanne (140) de façon à faire tourner l'élément de vanne (140) et ainsi rompre l'alignement entre le premier trou traversant (141) et le troisième trou traversant (133), une pression hydraulique peut être établie dans ledit ensemble de carter, pour connecter dynamiquement ledit ensemble de carter et ledit arbre de sortie (1).

2. Embrayage hydraulique selon la revendication 1, dans lequel ledit dispositif de commande manuel comprend une tige de commande (161) qui peut être actionnée directement par l'opérateur afin de déplacer ledit manchon (160) jusqu'à une première position fermant ledit deuxième trou traversant (142) ou une deuxième position dégageant ledit deuxième trou traversant.
